# EUROPEAN PATENT SPECIFICATION

(11) **EP 2 766 820 B1**
(45) Date of publication and mention of the grant of the patent: **07.07.2021**
(21) Application number: 12840609.7
(22) Date of filing: 15.10.2012
(51) Int. Cl.: G06F 9/451, G06F 15/16, G06F 21/30, G06F 3/14, G06F 9/44

(54) **SYSTEM AND METHOD FOR A DISTRIBUTED VIRTUAL DESKTOP INFRASTRUCTURE**
SYSTEM UND VERFAHREN FÜR EINE VERTEILTE VIRTUELLE DESKTOP-INFRASTRUKTUR
SYSTÈME ET PROCÉDÉ POUR INFRASTRUCTURE DE BUREAU VIRTUEL DISTRIBUÉE

(30) Priority: 13.10.2011 US 201161546701 P
(43) Date of publication of application: 20.08.2014
(73) Proprietor: Citrix Systems Inc., Fort Lauderdale, FL 33309 (US)
(72) Inventor: GRAHAM, Simon, Fort Lauderdale, FL 33309 (US)
(74) Representative: Murgitroyd & Company
(86) International application number: PCT/US2012/060252
(87) International publication number: WO 2013/056228

(56) References cited:
- JP-A- 2002 533 830
- JP-A- 2004 145 889
- JP-A- 2006 099 406
- KR-A- 20020 015 699
- US-A1- 2010 325 278
- Anonymous: "Wake-on-LAN - Wikipedia, the free encyclopedia", , 17 March 2008 (2008-03-17), XP055269753, Retrieved from the Internet: URL:https://en.wikipedia.org/w/index.php?t itle=Wake-on-LAN&oldid=198803704 [retrieved on 2016-04-29]

## Description

### CROSS REFERENCE TO RELATED APPLICATIONS

This application claims benefit of priority from United States Provisional Patent Application No. 61/546,701, filed October 13, 2011, and United States Patent Application No. 12/338,452, filed December 18, 2008.

### BACKGROUND OF THE INVENTION

### Field of the Invention

This invention relates generally to virtual desktop infrastructures and, more specifically, to systems and methods for providing, executing, and/or interacting with a distributed virtual desktop infrastructure.

### Description of Related Art

Traditionally, virtual desktop infrastructures (VDIs) require a large amount of infrastructure to run all of the virtual machine workloads in a data center. At the same time, thin clients used by end-users to access the VDI sessions generally serve no greater purpose than normal thick clients. The price differential between a suitably configured thin client and a fully robust thick client is small. Further, users often want or need to perform some local processing while accessing a VDI, which results in them accessing their VDI session from a traditional laptop or desktop computing system.

However, thin clients for accessing VDI sessions pose advantages over traditional thick client computing because information technology (IT) support can offer a guaranteed service-level agreement (SLA) for VDI sessions since IT controls the complete environment. Further, environments with fixed client equipment can offer session portability that is not possible with traditional computing (*e.g.,* doctors/nurses moving between patients rooms can use the hardware in each room to connect to an existing VDI session).

US 2010/0325278 relates to techniques for launching a virtual machine associated with a client during startup. A virtual machine associated with a client is identified by a controller in response to a message indicating that the client is starting up. The controller causes the associated virtual machine to be launched automatically over the network as a part of a startup process of the client without user intervention.

### SUMMARY OF THE INVENTION

It is, therefore, an object of the present invention to provide systems and methods for providing, executing, and/or interacting with distributed VDIs that address some or all of the above-mentioned drawbacks associated with existing systems.

In accordance with the invention, there is provided: computer-implemented methods for providing distributed virtualized desktops as recited by claims 1 and 6; and a system for providing distributed virtualized desktops as recited by claim 14.

In one preferred and non-limiting embodiment of the present invention, provided is a computer-implemented method for providing distributed virtualized desktops, the method
performed on at least one computer including at least one processor, the method comprising: receiving, at a first computer, user credential data for at least one user; transmitting, to a management server, at least a portion of the user credential data and identifying information of the first computer; receiving, from central management server, an identification of a home system for the at least one user based at least partially on the user credential data, the home system comprising a second computer executing at least one virtual machine including a desktop; and receiving, at the first computer, display data from the second computer, the display data configured to generate a representation of at least a portion of the desktop on the first computer, such that the at least one user is able to access the desktop while the at least one virtual machine on the second computer is executing.

In one example, the first computer and the second computer comprise a client management application configured to communicate with the management server. In a further example, the first computer and the second computer are in communication through a local area network (LAN). In another example, the display data from the second computer is received by the first computer through a direct connection facilitated by a traversal of at least one network address translation (NAT) gateway. Moreover, the computer-implemented method may further include the steps of receiving a copy of a memory state from the first computer; and identifying at least one portion of the memory state that was modified during the receiving of the copy of the memory state from the first computer.

In some instances, the method may continue with the steps of receiving a copy of the at least one portion of the memory state; identifying at least one other portion of the memory state that was modified during the receiving of the copy of the at least one portion of the memory state, wherein the at least one other portion of the memory state is a subset of the at least one portion of the memory state; and receiving a copy of the at least one other portion of the memory state. It will be further appreciated that the method may further involve repeatedly identifying parts of the memory state that changed during a previous iteration of copying and receiving the identified parts of the memory state until no further changed parts of the memory state are identified or the changed parts of the memory state are below a predetermined threshold.

According to another preferred and non-limiting embodiment of the present invention, provided is a system for providing distributed virtualized desktops, the system comprising at least one management server including at least one processor, the at least one management server configured to: process user credential data for a user and device identification data for a first computing device, the user credential data and the device identification data received from the first computing device; determine a home system for the user based at least partially on at least a portion of the user credential data and the device identification data, the home system comprising a second computing device executing at least one virtual machine including at least one desktop; and transmit, to the first computing device, data configured to facilitate a direct connection between the first computing device and the second computing device, such that the first computing device displays the at least one desktop while the at least one virtual machine continues to execute on the second computing device.

In one example of the system, the management server may be further configured to cause at least one of the first and second computing devices to migrate the virtual machine from the second computing device to the first computing device while the virtual machine is executing. The virtual machine may be migrated by copying a memory state of the virtual machine from the second computer, identifying at least one portion of the memory state that changed during the copying of the memory state, and copying the at least one portion of the memory state from the second computing device.

In one embodiment, the first and second computing devices may comprise a client management application configured to communicate with the management server. Moreover, in one example, the first and second computing devices may be in communication through a local area network (LAN). In another embodiment, the management server may be further configured to receive at least one of a desktop state and a desktop status for at least one desktop on the second computing device. The at least one of a desktop state and a desktop status may be transmitted to the first computing device at predetermined intervals. In a further embodiment, the management server may be further configured to power on at least one of the first computing device and the second computing device.

According to a further preferred and non-limiting embodiment of the present invention, provided is a distributed virtual desktop infrastructure system, comprising at least one management server comprising at least one processor, the at least one management server configured to provide a plurality of centrally managed virtual machines to a plurality of client systems, the at least one management server further configured to determine a home system of the plurality of client systems for at least one user; and a plurality of client management applications in communication with the at least one management server, the plurality of client management applications configured to execute on the plurality of client systems, and display, on at least one client system, a virtual desktop of at least one virtual machine executing on the home system.

In one embodiment of the distributed virtual desktop infrastructure system, if the home system is local to a first computing device being used by the at least one user, the virtual desktop is displayed from the at least one virtual machine local to the first computing device. In another embodiment, the plurality of client management applications are configured to migrate the at least one virtual machine from the home system to the at least one client system while the at least one virtual machine is executing on the home system. In a further embodiment, the distributed virtual desktop infrastructure system may further include a storage area network in communication with the plurality of client systems. In one example, the home system is at least one other client system of the plurality of systems, and the at least one client system displays the virtual desktop through a communication link with the at least one other client system.

These and other features and characteristics of the present invention, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and the claims, the singular form of "a", "an", and "the" include plural referents unless the context clearly dictates otherwise.

### BRIEF DESCRIPTION OF THE DRAWINGS

FIG. 1 is a schematic view of a distributed VDI system according to the principles of the present invention;
FIG. 2 is another schematic view of a distributed VDI system according to the principles of the present invention;
FIG. 3 is a further schematic view of a distributed VDI system according to the principles of the present invention;
FIG. 4 is a flow diagram for a method for providing a distributed VDI system according to the principles of the present invention; and
FIG. 5 is a flow diagram for a method for migrating a virtual machine in a distributed VDI system according to the principles of the present invention.

### DESCRIPTION OF THE PREFERRED EMBODIMENTS

For purposes of the description hereinafter, it is to be understood that the invention may assume various alternative variations and step sequences, except where expressly specified to the contrary. It is also to be understood that the specific devices and processes illustrated in the attached drawings, and described in the following specification, are simply exemplary embodiments of the invention. Hence, specific arrangements, protocols, hardware components, interfaces, and/or other characteristics related to the embodiments disclosed herein are not to be considered as limiting.

As used herein, the terms "communication" and "communicate" refer to the receipt or transfer of one or more signals, messages, commands, and/or other types of data. For one unit or component to be in communication with another unit or component means that the one unit or component is able to receive data from and/or transmit data to the other unit or component. This may refer to a direct or indirect connection that may be wired and/or wireless in nature. Additionally, two units or components may be in communication with each other even though the data transmitted may be modified, processed, routed, etc., between the first and second unit or component. For example, a first unit may be in communication with a second unit even though the first unit passively receives data, and does not actively transmit data to the second unit. As another example, a first unit may be in communication with a second unit if an intermediary unit processes data from one unit and transmits processed data to the second unit. It will be appreciated that numerous other arrangements are possible.

According to one preferred and non-limiting embodiment of the present invention, the distributed video desktop infrastructure (VDI) system may be used with a system for providing centrally managed virtual machines (VM) in the form of disk images and/or other forms of data that are distributed to and executed by client systems on a hypervisor platform. The systems and methods described in U.S. Patent Application No. 12/338,452, including but not limited to the virtual workspaces management architecture and the workspaces execution engine described therein, may be used to provide and execute the virtual machines. For example, a management server may centrally store several virtual machines and allow for the central management of the same. The management server may provide disk images of the virtual machines to client systems for execution of the virtual machines locally on the client systems. However, it will be appreciated that various other implementations of the distributed VDI system may be possible.

As used herein, the term "management server" refers to one or more computing devices capable of transmitting and receiving data from multiple client systems, including hardware and/or software components, modules, functions, and/or the like. The management server includes or has access to one or more data structures including identifying information for the multiple client systems. Such data structures may include, for example, relational databases that associate multiple users with respective client systems. As used herein, the term "home system" refers to a client system associated with and/or assigned to a particular user. The databases may also indicate what client systems do not have a particular user associated with and/or assigned to it. Identifying information for the multiple client systems may include, as an example, system names, IP addresses, MAC addresses, and/or the like. The management server may also provide connection information for client systems, such as port numbers, statuses, operating systems, memory information, and/or the like, to facilitate direct connections (e.g., remote desktop protocol (RDP) sessions, or other means) between client systems.

The terms "client system", "client computer", "client device", "computing device", and/or the like, as used herein, refer to one or more computing devices including hardware and/or software configured to communicate with a network and the management server. In one preferred and non-limiting embodiment, each client system is provided with a client management application that runs as a background process and helps manage the distributed VDI from the client-side. In one non-limiting embodiment, the client management application is a daemon that runs as a background process on a client system. The processing capabilities of the client systems are used to provide at least a portion of the distributed VDI, and facilitate the functionality of the distributed VDI system described herein. However, it will be appreciated that embodiments of the client systems may take on various forms.

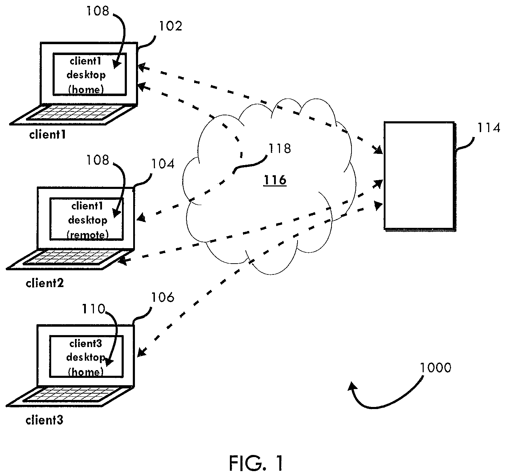

With reference to FIG. 1, shown is a distributed VDI system 1000 according to one preferred and non-limiting embodiment. The distributed VDI system 1000 includes client systems client1 102, client2 104, and client3 106. Further, the system 1000 includes a management server 114 in communication with each of the client systems 102, 104, 106. As can be seen, the client systems 102, 104, 106 communicate with the management server 114 through a network environment 116, such as a local area network (LAN), a wide area network (WAN), the internet, and/or the like. In this example, client1 102 and client 2 104 are in communication with each other through a communication link 118, such as a direct connection, that is not routed through the management server 114. In this example, client1 102 is a home system for a first user, and client2 104 is a home system for a second user. Likewise, client1 102 is associated with a virtual machine, including a desktop 108, that is being executed on client1 102.

With continued reference to FIG. 1, when the first user enters user credentials into client2 104, client2 104 displays the desktop 108 *(i.e.,* as a virtual desktop) of the virtual machine assigned to and/or associated with the first user, while that virtual machine is simultaneously executing on client1 102. This remote desktop communication 118 may be performed without having to stop the execution of the virtual machine and virtual desktop 108 on client1 102. Thus, the first user is able to remotely access and interact with the desktop 108 on client2 while the client1 102 client system performs the necessary processing to run that virtual desktop 108. It will be appreciated that the communication link 118 for the virtual desktop 108 may be established through the remote desktop protocol (RDP), or by any other means. Client3 106 is in communication with the management server 114 and is executing a virtual machine including a desktop 110.

As used herein, the terms "credentials" and "user credentials" refer to identifying and/or authenticating data for at least one user. For example, a particular user's credentials may include a name, login, password, IP address, identification number, key, certificate, and/or the like. It will be appreciate that credentials may also include any form of data input that serves to identify and/or authenticate a user, such as biometric inputs, visual input, audible inputs, and the like.

When a user inputs credentials into a client system, the client system determines whether the client system is a home system for that particular user, based at least on the user's credentials. With continued reference to FIG. 1, the determination may also be performed by the management server 114, which receives at least a portion of the credential data and, in some instances, identifying information from a client system (*e.g.,* client2 104) and makes a determination based on the received data. In one preferred but non-limiting embodiment, the client system (*e.g.,* client2 104) being used first determines if it is the home system for the user based on information it has locally and, if the client system 104 is not the home system for the user, it communicates identifying information for the client system 104 and/or credential data to the management server 114 and receives data configured to allow the client system 104 to establish a communication link 118 with a second client system (e.g., client1 102) that is the home system for that user, and is executing a virtual machine including a desktop 108.

Still referring to FIG. 1, the desktops of the remote virtual machines are presented transparently on the client systems 102, 104, 106. Thus, whether or not a particular client system is the home system for a local user, the local user of that particular client system is provided with substantially the same experience as if he or she were using his or her home system locally. If the client system is the home system for the local user, the client management application may immediately display the user's desktop provided by a virtual machine executing on that system. Otherwise, the client system may identify the home system for the local user, establish communication with the home system, and display a virtual desktop of a virtual machine that is simultaneously executing on the home system.

The home system for a particular user can be changed from one client system to another client system by storing the user's data on a storage area network (SAN) and allowing different client systems in the SAN to mount that data. In one preferred and non-limiting embodiment, a SAN-based migration of a home system can be provided if the user's virtual machines are not actively running on the home system when the user logs onto a different client system, or if the user wants to move his home system through a home relocation process. However, it will be appreciated that a home relocation process may be initiated in various other ways, and using various methods of data transfer. If the user's virtual machines are not actively running on the home system when the user logs onto a different client system, the home system receives a command to unmount the SAN logical memory unit (e.g., one or more logical unit numbers (LUN), one or more SCSI device IDs, and/or the like) and clears information that it stored indicating that it is the home system for that user. Once the SAN logical memory unit is unmounted from the home system, the client system that will become the new home system for the user (*i.e.,* the client system that the virtual machine will be migrated to) is caused to mount the SAN LUN, or other memory unit(s), and become the home system for that user.

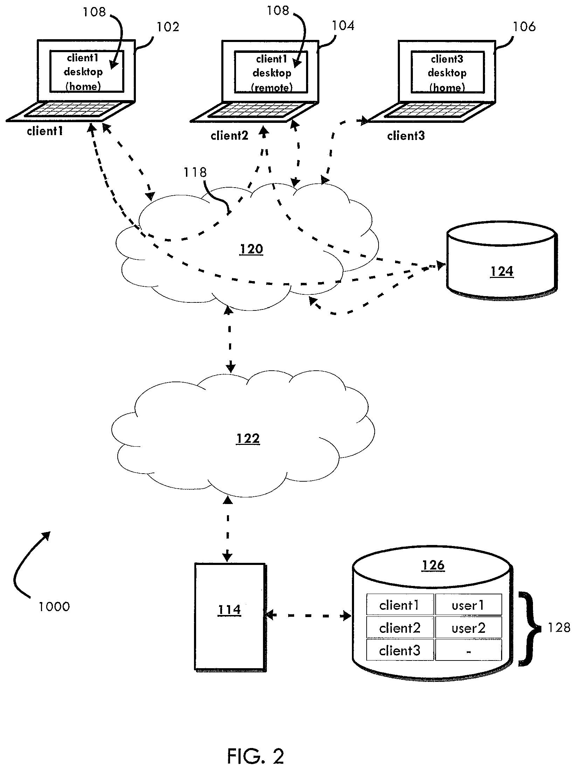

Referring now to FIG. 2, shown is a distributed VDI system 1000 according to another preferred and non-limiting embodiment. Client systems client 1 102, client2 104, and client3 106 are in communication with a SAN 120, including a network storage device 124. The SAN is also in communication with an external network 122, such as the internet. A management server 114 is in communication with the external network 122 and a management server storage device 126, including a client information database 128. For example, a user at client2 104 may wish to use his or her home system on client2 104. After providing user credentials to client2 104, the credentials are communicated to the management server 114. The management server 114 uses the client information database 128 to determine that the user (*e.g.,* user1) is associated with client1 102. In this example, user1 is associated with client1 in the client information database 128, user2 is associated with client2 104, and client3 106 does not have a particular user associated with it.

With continued reference to FIG. 2, the management server, after identifying client1 102 as the home system for the user local to client2 104, communicates this information to client2 104, and the client management application executing thereon. With the information that it receives, the client system client2 104 establishes communication with client system client1 102 over a connection 118 through the SAN 120. In this example, a port number and/or internal IP address of client1 102 may be provided to client2 104, although other identifiers may be used. If client2 and client1 are not part of the same SAN 120, an external IP address and port number may be used to assist in connecting client1 102 and client2 104 through a NAT gateway. Once the communication link 118 is established between client1 102 and client2 104, the desktop 108 of a virtual machine running on client1 102 is transported to client2 104 and input data from client2 104 is relayed to client1 102.

In some instances, a user may want to migrate his or her home system in order to receive a fully localized run-time environment, or if errors are encountered in communicating between local client systems to the remote virtual machines running on the current home system for the user. A home relocation process may be performed to migrate the virtual machine by first transferring a copy of the virtual machine memory state while the virtual machine is running. Since the virtual machine is running, this process can be performed transparently while the user is interacting with the virtual machine through RDP, or by some other method.

With continued reference to FIG. 2, the user (e.g., user1) using client2 104 to access client1 102 may wish to migrate the virtual machine, including the desktop 108, from client1 102 to client2 104. In this instance, a live migration may be performed while the virtual machine is accessed on the client system client1 102, utilizing the SAN and a memory storage device 124 in communication with the SAN 120, client1 102 and client2 104. In a live migration, client1 102 has mounted at least a portion of the memory storage device 124 and receives a command to migrate the virtual machine to client2 104. In response, client1 102 transfers the entire memory state of the virtual machine to the memory storage device 124 and tracks the portions of memory (e.g., memory pages, blocks, or other units) that are changed during the transfer. The tracked portions of memory are subsequently transferred, and the process of tracking new changes is repeated until there are no changed portions of memory, until a predetermined number of iterations have been performed, until a predetermined time interval expires, and/or until the number of changed portions of memory is below a predetermined threshold.

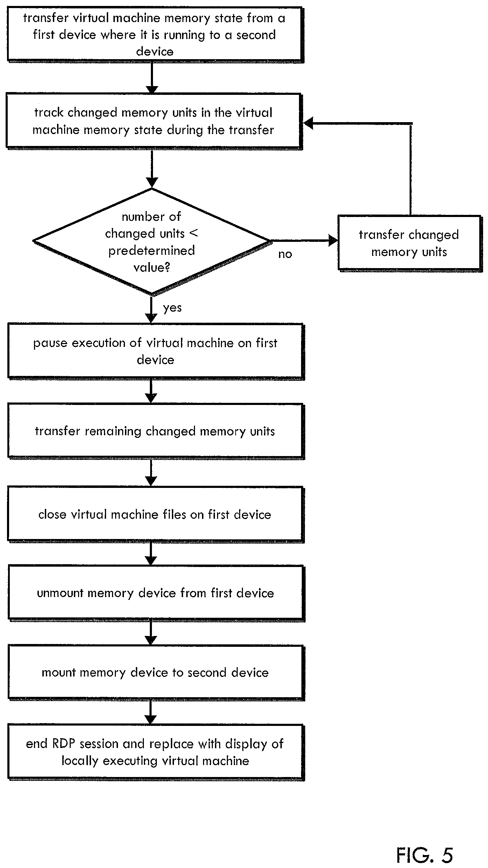

A suitable home relocation process is depicted by FIG. 5, although it will be appreciated that any number of methods may be employed. In the illustrated example, the virtual machine memory state of a first device is migrated to a second device within a SAN. During this transfer, the memory units that change are tracked. Although this method shows a looping process that occurs until the number of changed units is less than a predetermined value, other parameters may be used to determine when to stop tracking and transferring changed memory units. For example, and as explained herein, the looping may occur until there are no changed portions of data, until the amount of changed portions of data drops below a predefined threshold, and/or until a predefined number of iterations have been performed.

During the home relocation process, or other form of virtual machine migration, portions of data (*e.g.,* memory pages, blocks, or other units) that are changed while the memory is being transferred may be tracked by a tracking function of the client management application. In this way, after each complete transfer is performed, the portions that changed during the complete transfer may be copied. The process of tracking changed portions of data during a transfer of the data may be performed repeatedly, as already explained, until there are no changed portions of data, until the amount of changed portions of data drops below a predefined threshold, and/or until a predefined number of iterations have been performed. Once this looping process ends, the virtual machine is paused and the final portions of changed data are transferred. At this stage, the complete virtual machine state is present on both client systems. The virtual machine files are then closed on the current home system and the LUN is unmounted from that client system. The LUN can then be mounted on the new home system (*i.e.,* a target client system) and the virtual machine files reopened. The RDP session or other connection previously used to remotely access the virtual machine and desktop can then be terminated and a new desktop can be created on the new home system to resume the virtual machine locally.

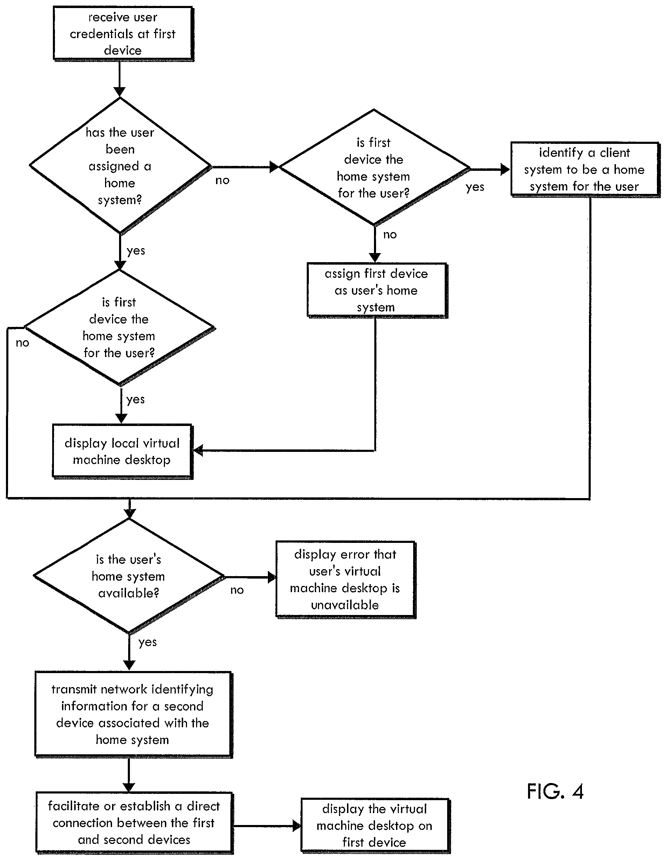

In one preferred and non-limiting embodiment, the functionality of the distributed VDI system 1000 may appear to be the same to an end user regardless of the client system used by that user. Referring now to FIG. 4, a flow diagram is shown for a method for providing the distributed VDI to client systems according to one preferred and non-limiting embodiment of the present invention. The method begins by a user providing credential information to a first device (*i.e*., client system). For example, a user may approach a client system and enter credentials into a login prompt, scan a smartcard, or otherwise provide credentials. If the client system is the user's home system (*e.g.,* a client system that is assigned to and/or associated with the user), the user will immediately see the normal, local desktop for that system.

If the client system is not the user's home system, the client system provides access to their desktop(s), running on their home system, as if executing locally. In this latter circumstance, any desktops that actually do run on the client system may not be visible to the user. If the user does not have a home system assigned to and/or associated with it, and the client system is not associated with and/or assigned to any user, then the client system may be assigned and/or associated with that user, the client system becoming that user's home system. If the client system is associated and/or assigned to another user, the user may be assigned a further client system as its home system. If the user's data associated with the user's home system is stored on a SAN accessible to both a home system and a different client system being accessed by the user, a transfer of the user's desktops can be completed as described herein. The desktop migration may be controlled by network policy on a managed LAN and/or SAN, as an example.

In one preferred and non-limiting embodiment, the management server 114 includes one or more protocols to perform a number of functions. For example, the management server 114 may be configured to communicate to a client system what user is associated with and/or assigned to the client system, and associate and/or assign an "unowned" client system (*i.e.,* not established a home system for any particular user) to be a home system for a user. Further, the management server 114 may be configured to communicate to a client system to indicate that a different client system is being utilized to access the desktop(s) associated with the user's home system. Such an indication may cause the client management application to change the frequency that it updates the management server 114, reducing the check-in time with the server 114.

The client management application may manage client identifying information for the client system the application is running on, and transmit the same to the management server 114 and/or other client management applications running on different client systems. The client identifying information may be used by the different client systems in accessing the virtual machine. This information may include, for example, an IP tuple to identify each client system and/or desktop that may be used to initiate RDP sessions, such as an IP address and port number. If the client systems communicating with each other are not on the same LAN, or are otherwise behind Network Address Translation (NAT) gateways, the client identifying information for a remote client system may be used by a local connecting client system to traverse the NAT gateway of the other client system or otherwise facilitate the establishment of a communication link. For example, if a NAT mode is in effect, the client management application may use port forwarding to provide remote access to another client management application running on a different client system.

Further, the client identifying information for a client system may also include a state and/or status of each desktop on that client system. This identifying information allows for other client systems to implement an interface that gives the appearance that the desktop running on the client system is running locally on the other client systems. The other client systems, connecting to the client system remotely, may receive this identifying information by way of the management server on a regular basis, maintaining the security of the client system such that it may prevent incoming connections and only allow outgoing connections to the management server.

With continued reference to FIG. 2, the client management application may also be used to control the state of each desktop running on a client system (*e.g.,* client1 102). For example, the client management application may be able to start a stopped virtual machine, or stop an executing virtual machine. A client system (*e.g.,* client2 104) being used by a user to remotely access a remote client system 102, the home system for that user, may communicate requests to the management server 114 to change the state of the virtual machine executing on the user's home system 102. The management server 114 would then provide a request to the home system 102 the next time it polls. Therefore, the client system 102 being accessed remotely would communicate with the management server 114 at a rapid frequency. However, it will be appreciated that varying frequencies, and non-frequent polling, may be used as well.

In some examples, instead of exchanging status information at every interval, it may only be communicated when changed. The communication exchange between the home system 102 and the client system 104 being used may involve the exchange of messages, such that the home system sends state changes and receives commands, and the client system 104 being used receives state changes and sends commands. The frequency of these communications may be set by administrative policy, or may be preset by the client management application and/or management server 114.

With continued reference to FIGS. 1 and 2, the client management application running on the client2 104 client system receives graphical data from the client1 102 client system. The client management application running on the client1 102 client system may be configured to generate graphical user interface (GUI) data, such as information conveyed in extended mark-up language (XML) format or related metadata, and transmit the same to the management server 114. For each desktop to be virtualized on the client2 104 client system, the client management application may create a window manager workspace and provide a full-screen instance of the desktop in that workspace using the identifying information of the client1 102 client system received from the management server 114. The window manager workspace may be treated like any other virtual machine workspace by the window manager workspace.

When a user commands a stopped virtual machine to be started, the client system being used by the user transmits a command to the management server 114. State changes are displayed and, when the client system indicates that the virtual machine is running and has an IP address, or other identifying information sufficient for the RDP client, the client system being used creates a desktop and executes the RDP client. A virtual networking computing (VNC) client may be executed initially, so that the boot process can be seen by the user, and subsequently the RDP session may be switched to once the virtual machine is running. An RDP server may also be implemented in the Dom0 domain, as an example, which integrates with a frame buffer for the virtual machine, such that only screen updates need to be transmitted between client systems instead of the whole screen representing the desktop.

In one preferred and non-limiting embodiment, the management server 114 may be configured to remotely manage and control the power of the client systems. In this embodiment, if a user's home system is powered off or sleeping, and is remote from the user, it would need to be turned on to allow remote access to the virtual machine and desktop. Further, an unowned system may have to be turned on if it is to be assigned to or associated with the user as the user's home system, and is off or sleeping. The power management functionality may be implemented with Active Management Technology (AMT), using Intel vPRO technology, as an example. Further, traditional wake-on-LAN mechanisms may be used to take up a sleeping LAN-connected device. It will be appreciated that the power may be managed through any other hardware and/or software means. The management server 114 may also be configured to deal with errors. For example, if communication cannot be established with a user's home system, or if the user's home system is not powered on, the client system being used by that user may be notified by the management server 114 and any number of scripts and/or predetermined error messages to allow the user to understand and possibly alleviate the error.

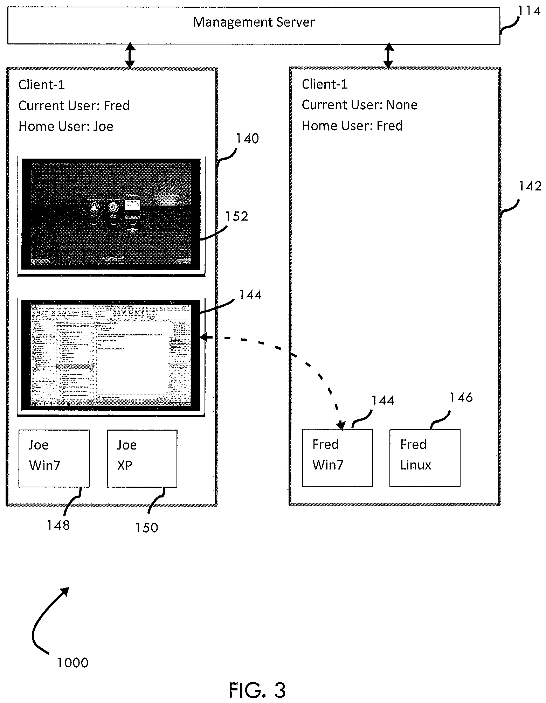

Referring now to FIG. 3, shown is a distributed VDI system according to one preferred and non-limiting embodiment. A management server 114 is in communication with a first client system 140 and a second client system 142. Each client system includes one or more virtual machines 148, 150, 144, 146 that may be accessible on either of the client systems. In the illustrated example, first client system 140 is currently executing a Windows 7 virtual machine 148 for Joe and a Windows XP virtual machine 150 for Joe, and the second client system 142 is currently executing a Windows 7 virtual machine 144 for Fred and a Linux virtual machine 146 for Fred. In this example, the first client system 140 is a home system for Joe and is currently being used by Fred.

With continued reference to FIG. 3, the second client system 142 is the home system for user Fred. User Fred logs into first client system 140 by presenting his credentials. These credentials may be forwarded to the management server 114 which may determine that user Fred desires to access his desktops 144, 146 through the first client system 140. Alternatively, Fred's credentials may be examined by the client management application running on the first client system 140 which makes the determination that the first client system 104 is not Fred's home system. After such a determination, Fred may be presented with a distributed VDI startup screen 152 that may be similar to the NxTop virtual machine user access screen described in United States Patent Application No. 12/338,452. The startup screen 152 facilitates communication with the management server 114 for the purpose of allowing Fred to access his home system 142 virtual machine desktops 144, 146. In one example, the distributed VDI startup screen 152 may be identical to the user access screen that would be presented to Fred if he were to log into his home system 142.

With continued reference to FIG. 3, Fred selects an existing virtual machine desktop or starts up a new virtual machine desktop. Communication between user Fred on the first client system 140 and Fred's home system 142 is brokered through the management server 114 to facilitate smooth operation and consistency of state information among the client systems 140, 142 and the management server 114. Once user Fred has selected a virtual machine desktop 144, conventional remote desktop communication between the remote client system 142 and a host client system 140 executing the virtual machine desktop 144 may be enabled. Machine and client state information, and other data that may facilitate proper synchronization among the clients 140, 142 and the management server 114, may continue to be communicated among the client systems to maintain status of the virtual machine on the management server 114, as an example.

The distributed VDI system may be used in hospital environments, as an example, where doctors, nurses, and other staff move from room to room and use different computer hardware throughout a shift. In this instance, the user would be able to continue to access a running virtual desktop on any number of terminals in any number of rooms. The terminals (e.g., computing devices) may be on the same LAN and/or SAN, and may mount and unmount the virtual machine from centralized SAN data storage each time a new terminal is used, or use RDP to simply virtualize the running desktop that the user wishes to access.

Although the invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements that are within the scope of the appended claims. For example, it is to be understood that the present invention contemplates that, to the extent possible, one or more features of any embodiment can be combined with one or more features of any other embodiment.

## Claims

1. A computer-implemented method for providing distributed virtualized desktops, the method performed at a first computer (104) including at least one processor, the method comprising:
receiving user credential data from a user;
determining based on the received user credential data if the first computer (104) is a home system of the user and if the first computer (104) is not the home system of the user;
transmitting, to a management server (114), the user credential data and device identification data of the first computer (104);
receiving, from the management server (114), an identification of the home system assigned to the user identified based on the user credential data, the home system comprising a second computer (102) executing at least one virtual machine including a desktop (108);
establishing communication between the first computer (104) and the second computer (102) using the received identification of the home system; and
receiving display data from the second computer (102), the display data configured to generate a representation of at least a portion of the desktop (108) on the first computer (104), such that the user is able to access the desktop (108) while the at least one virtual machine on the second computer (102) is executing;
wherein the first computer (104) and the second computer (102) are client computers directly accessible to the user.

2. The computer-implemented method of claim 1, wherein the communication between the second computer and the first computer is established through a direct connection facilitated by a traversal of at least one network address translation gateway.

3. The computer-implemented method of claim 1, further comprising:
receiving a copy of a memory state of the at least one virtual machine from the second computer (102); and
identifying at least one portion of the memory state that was modified while receiving the copy of the memory state.

4. The computer-implemented method of claim 3, further comprising:
receiving a copy of the at least one portion of the memory state;
identifying at least one other portion of the memory state that was modified while receiving the copy of the at least one portion of the memory state, wherein the at least one other portion of the memory state is a subset of the at least one portion of the memory state;
receiving a copy of the at least one other portion of the memory state.

5. The computer-implemented method of claim 4, further comprising repeatedly identifying parts of the memory state that changed during a previous iteration of copying and receiving the identified parts of the memory state until no further changed parts of the memory state are identified or the changed parts of the memory state are less than a predetermined threshold.

6. A computer implemented method for providing distributed virtualized desktops, the method being performed on a management server (114) including at least one processor, the method comprising:
receiving, from a first computer (104), user credential data for a user and device identification data for the first computer (104);
identifying a home system assigned to the user identified based on the user credential data, the home system comprising a second computer (102) executing at least one virtual machine including at least one desktop (108); and
transmitting, to the first computer (104), data configured to facilitate a direct connection between the first computer (104) and the second computer (102), such that the first computer (104) displays the at least one desktop (108) while the at least one virtual machine continues to execute on the second computer (102);
wherein the first computer (104) and the second computer (102) are client computers directly accessible to the user.

7. The method of claim 1 or claim 6, further comprising causing at least one of the first and second computers (104, 102) migrate the virtual machine from the second computer (102) to the first computer (104) while the virtual machine is executing.

8. The method of claim 7, wherein the virtual machine is migrated by copying a memory state of the virtual machine from the second computer, identifying at least one portion of the memory state that changed during the copying of the memory state, and copying the at least one portion of the memory state from the second computer (102).

9. The method of claim 1 or claim 6, wherein the first and second computers (104, 102) comprise a client management application configured to communicate with the management server.

10. The method of claim 1 or claim 6, wherein the first and second computers (104, 102) are in communication through a local area network.

11. The method of claim 6, further comprising to receiving at least one of a desktop state and a desktop status for at least one desktop on the second computer (104).

12. The method of claim 11, further comprising transmitting the at least one of a desktop state and a desktop status to the first computer (104) at predetermined intervals.

13. The method of claim 11, further comprising powering on, by the management server (114), at least one of the first computer (104) and the second computer (102).

14. A system for providing distributed virtualized desktops, the system comprising a first computer (104) performing a method according to claims 1 to 5, and a management server (114) performing a method according to claims 6 to 13.

## Patentansprüche

1. Ein computerimplementiertes Verfahren zum Bereitstellen verteilter virtualisierter Desktops, wobei das Verfahren an einem ersten Computer (104), der mindestens einen Prozessor umfasst, durchgeführt wird, wobei das Verfahren Folgendes beinhaltet:
Empfangen von Benutzeranmeldedaten von einem Benutzer;
Bestimmen auf der Basis der empfangenen Benutzeranmeldedaten, ob der erste Computer (104) ein Heimsystem des Benutzers ist und ob der erste Computer (104) nicht das Heimsystem des Benutzers ist;
Übertragen, an einen Verwaltungsserver (114), der Benutzeranmeldedaten und von Vorrichtungsidentifizierungsdaten des ersten Computers (104);
Empfangen, von dem Verwaltungsserver (114), einer Identifizierung des Heimsystems, das dem auf der Basis der Benutzeranmeldedaten identifizierten Benutzer zugeordnet ist, wobei das Heimsystem einen zweiten Computer (102) beinhaltet, der mindestens eine virtuelle Maschine, die einen Desktop (108) umfasst, ausführt;
Aufbauen einer Kommunikation zwischen dem ersten Computer (104) und dem zweiten Computer (102) unter Verwendung der empfangenen Identifizierung des Heimsystems; und
Empfangen von Anzeigedaten von dem zweiten Computer (102), wobei die Anzeigedaten konfiguriert sind, um eine Darstellung mindestens eines Anteils des Desktops (108) auf dem ersten Computer (104) zu erzeugen, sodass der Benutzer in der Lage ist, auf den Desktop (108) zuzugreifen, während die mindestens eine virtuelle Maschine auf dem zweiten Computer (102) ausgeführt wird;
wobei der erste Computer (104) und der zweite Computer (102) Client-Computer sind, auf die der Benutzer direkt zugreifen kann.

2. Computerimplementiertes Verfahren gemäß Anspruch 1, wobei die Kommunikation zwischen dem zweiten Computer und dem ersten Computer durch eine direkte Verbindung aufgebaut wird, die durch eine Traversierung mindestens eines Netzwerkadressübersetzungsgateways ermöglicht wird.

3. Computerimplementiertes Verfahren gemäß Anspruch 1, das ferner Folgendes beinhaltet:
Empfangen einer Kopie eines Speicherzustands der mindestens einen virtuellen Maschine von dem zweiten Computer (102); und
Identifizieren mindestens eines Anteils des Speicherzustands, der modifiziert wurde,
während die Kopie des Speicherzustands empfangen wurde.

4. Computerimplementiertes Verfahren gemäß Anspruch 3, das ferner Folgendes beinhaltet:
Empfangen einer Kopie des mindestens einen Anteils des Speicherzustands;
Identifizieren mindestens eines anderen Anteils des Speicherzustands, der modifiziert wurde, während die Kopie des mindestens einen Anteils des Speicherzustands empfangen wurde, wobei der mindestens eine andere Anteil des Speicherzustands eine Untergruppe des mindestens einen Anteils des Speicherzustands ist;
Empfangen einer Kopie des mindestens einen anderen Anteils des Speicherzustands.

5. Computerimplementiertes Verfahren gemäß Anspruch 4, das ferner das wiederholte Identifizieren von Teilen des Speicherzustands, die sich während einer vorhergehenden Iteration des Kopierens geändert haben, und Empfangen der identifizierten Teile des Speicherzustands, bis keine weiteren geänderten Teile des Speicherzustands identifiziert werden oder die geänderten Teile des Speicherzustands weniger als ein vorgegebener Schwellenwert sind, beinhaltet.

6. Ein computerimplementiertes Verfahren zum Bereitstellen verteilter virtualisierter Desktops, wobei das Verfahren auf einem Verwaltungsserver (114), der mindestens einen Prozessor umfasst, durchgeführt wird, wobei das Verfahren Folgendes beinhaltet:
Empfangen, von einem ersten Computer (104), von Benutzeranmeldedaten für einen Benutzer und Vorrichtungsidentifizierungsdaten für den ersten Computer (104);
Identifizieren eines Heimsystems, das dem auf der Basis der Benutzeranmeldedaten identifizierten Benutzer zugeordnet ist, wobei das Heimsystem einen zweiten Computer (102) beinhaltet, der mindestens eine virtuelle Maschine, die mindestens einen Desktop (108) umfasst, ausführt; und
Übertragen, an den ersten Computer (104), von Daten, die konfiguriert sind, um eine direkte Verbindung zwischen dem ersten Computer (104) und dem zweiten Computer (102) zu ermöglichen, sodass der erste Computer (104) den mindestens einen Desktop (108) anzeigt, während die mindestens eine virtuelle Maschine weiterhin auf dem zweiten Computer (102) ausgeführt wird;
wobei der erste Computer (104) und der zweite Computer (102) Client-Computer sind, auf die der Benutzer direkt zugreifen kann.

7. Verfahren gemäß Anspruch 1 oder Anspruch 6, das ferner das Bewirken, dass mindestens einer von dem ersten und dem zweiten Computer (104, 102) die virtuelle Maschine von dem zweiten Computer (102) auf den ersten Computer (104) migriert, während die virtuelle Maschine ausgeführt wird, beinhaltet.

8. Verfahren gemäß Anspruch 7, wobei die virtuelle Maschine durch das Kopieren eines Speicherzustands der virtuellen Maschine von dem zweiten Computer, das Identifizieren mindestens eines Anteils des Speicherzustands, der sich während des Kopierens des Speicherzustands geändert hat, und das Kopieren des mindestens einen Anteils des Speicherzustands von dem zweiten Computer (102) migriert wird.

9. Verfahren gemäß Anspruch 1 oder Anspruch 6, wobei der erste und der zweite Computer (104, 102) eine Client-Verwaltungsanwendung beinhalten, die konfiguriert ist, um mit dem Verwaltungsserver zu kommunizieren.

10. Verfahren gemäß Anspruch 1 oder Anspruch 6, wobei der erste und der zweite Computer (104, 102) über ein lokales Netzwerk in Kommunikation stehen.

11. Verfahren gemäß Anspruch 6, das ferner das Empfangen von mindestens einem von einem Desktopzustand und einem Desktopstatus für mindestens einen Desktop auf dem zweiten Computer (104) beinhaltet.

12. Verfahren gemäß Anspruch 11, das ferner das Übertragen des mindestens einen von einem Desktopzustand und einem Desktopstatus an den ersten Computer (104) in vorgegebenen Zeitabständen beinhaltet.

13. Verfahren gemäß Anspruch 11, das ferner das Einschalten, durch den Verwaltungsserver (114), von mindestens einem von dem ersten Computer (104) und dem zweiten Computer (102) beinhaltet.

14. Ein System zum Bereitstellen verteilter virtualisierter Desktops, wobei das System einen ersten Computer (104), der ein Verfahren gemäß den Ansprüchen 1 bis 5 durchführt, und einen Verwaltungsserver (114), der ein Verfahren gemäß den Ansprüchen 6 bis 13 durchführt, beinhaltet.

## Revendications

1. Un procédé mis en œuvre par ordinateur pour fournir des bureaux virtualisés distribués, le procédé étant réalisé au niveau d'un premier ordinateur (104) incluant au moins un processeur, le procédé comprenant le fait :
de recevoir des données de justificatif d'identité d'utilisateur en provenance d'un utilisateur ;
de déterminer sur la base des données de justificatif d'identité d'utilisateur reçues si le premier ordinateur (104) est un système nominal de l'utilisateur et si le premier ordinateur (104) n'est pas le système nominal de l'utilisateur ;
de transmettre, à un serveur de gestion (114), les données de justificatif d'identité d'utilisateur et des données d'identification de dispositif du premier ordinateur (104) ;
de recevoir, en provenance du serveur de gestion (114), une identification du système nominal attribué à l'utilisateur identifié sur la base des données de justificatif d'identité d'utilisateur, le système nominal comprenant un deuxième ordinateur (102) exécutant au moins une machine virtuelle incluant un bureau (108) ;
d'établir une communication entre le premier ordinateur (104) et le deuxième ordinateur (102) en utilisant l'identification reçue du système nominal ; et
de recevoir des données d'affichage en provenance du deuxième ordinateur (102), les données d'affichage étant configurées pour générer une représentation d'au moins une portion du bureau (108) sur le premier ordinateur (104), de telle sorte que l'utilisateur est en mesure d'accéder au bureau (108) pendant que l'au moins une machine virtuelle sur le deuxième ordinateur (102) s'exécute ;
dans lequel le premier ordinateur (104) et le deuxième ordinateur (102) sont des ordinateurs clients directement accessibles à l'utilisateur.

2. Le procédé mis en œuvre par ordinateur de la revendication 1, dans lequel la communication entre le deuxième ordinateur et le premier ordinateur est établie par l'intermédiaire d'une connexion directe facilitée par une traversée d'au moins une passerelle de traduction d'adresse réseau.

3. Le procédé mis en œuvre par ordinateur de la revendication 1, comprenant en sus le fait :
de recevoir une copie d'un état de mémoire de l'au moins une machine virtuelle en provenance du deuxième ordinateur (102) ; et
d'identifier au moins une portion de l'état de mémoire qui a été modifiée pendant la réception de la copie de l'état de mémoire.

4. Le procédé mis en œuvre par ordinateur de la revendication 3, comprenant en sus le fait :
de recevoir une copie de l'au moins une portion de l'état de mémoire ;
d'identifier au moins une autre portion de l'état de mémoire qui a été modifiée pendant la réception de la copie de l'au moins une portion de l'état de mémoire, l'au moins une autre portion de l'état de mémoire étant un sous-ensemble de l'au moins une portion de l'état de mémoire ;
de recevoir une copie de l'au moins une autre portion de l'état de mémoire.

5. Le procédé mis en œuvre par ordinateur de la revendication 4, comprenant en sus de manière répétée le fait d'identifier des parties de l'état de mémoire qui ont changé au cours d'une itération précédente de copie et de recevoir les parties identifiées de l'état de mémoire jusqu'à ce qu'il ne soit plus identifié de parties de l'état de mémoire changées ou que les parties de l'état de mémoire changées soient inférieures à un seuil prédéterminé.

6. Un procédé mis en œuvre par ordinateur pour fournir des bureaux virtualisés distribués, le procédé étant réalisé sur un serveur de gestion (114) incluant au moins un processeur, le procédé comprenant le fait :
de recevoir, en provenance d'un premier ordinateur (104), des données de justificatif d'identité d'utilisateur pour un utilisateur et des données d'identification de dispositif pour le premier ordinateur (104) ;
d'identifier un système nominal attribué à l'utilisateur identifié sur la base des données de justificatif d'identité d'utilisateur, le système nominal comprenant un deuxième ordinateur (102) exécutant au moins une machine virtuelle incluant au moins un bureau (108) ; et
de transmettre, au premier ordinateur (104), des données configurées pour faciliter une connexion directe entre le premier ordinateur (104) et le deuxième ordinateur (102), de telle sorte que le premier ordinateur (104) affiche l'au moins un bureau (108) pendant que l'au moins une machine virtuelle continue de s'exécuter sur le deuxième ordinateur (102) ;
dans lequel le premier ordinateur (104) et le deuxième ordinateur (102) sont des ordinateurs clients directement accessibles à l'utilisateur.

7. Le procédé de la revendication 1 ou de la revendication 6, comprenant en sus le fait d'amener au moins un ordinateur parmi les premier et deuxième ordinateurs (104, 102) à faire migrer la machine virtuelle du deuxième ordinateur (102) au premier ordinateur (104) pendant que la machine virtuelle s'exécute.

8. Le procédé de la revendication 7, dans lequel la machine virtuelle est migrée par copie d'un état de mémoire de la machine virtuelle à partir du deuxième ordinateur, identification d'au moins une portion de l'état de mémoire qui a changé au cours de la copie de l'état de mémoire, et copie de l'au moins une portion de l'état de mémoire à partir du deuxième ordinateur (102).

9. Le procédé de la revendication 1 ou de la revendication 6, dans lequel les premier et deuxième ordinateurs (104, 102) comprennent une application de gestion client configurée pour communiquer avec le serveur de gestion.

10. Le procédé de la revendication 1 ou de la revendication 6, dans lequel les premier et deuxième ordinateurs (104, 102) sont en communication par l'intermédiaire d'un réseau local.

11. Le procédé de la revendication 6, comprenant en sus le fait de recevoir au moins un élément parmi un état de bureau et un statut de bureau pour au moins un bureau sur le deuxième ordinateur (104).

12. Le procédé de la revendication 11, comprenant en sus le fait de transmettre l'au moins un élément parmi un état de bureau et un statut de bureau au premier ordinateur (104) à intervalles prédéterminés.

13. Le procédé de la revendication 11, comprenant en sus le fait de mettre sous tension, par le serveur de gestion (114), au moins un ordinateur parmi le premier ordinateur (104) et le deuxième ordinateur (102).

14. Un système pour fournir des bureaux virtualisés distribués, le système comprenant un premier ordinateur (104) réalisant un procédé selon les revendications 1 à 5, et un serveur de gestion (114) réalisant un procédé selon les revendications 6 à 13.
